Europäisches Patentamt

European Patent Office

Office européen des brevets

(19)

(11) Publication number: **0 290 681 B1**

# (12) EUROPEAN PATENT SPECIFICATION

(45) Date of publication of patent specification: **04.09.91**

(51) Int. Cl.⁵: **B66C 23/28**, F16B 7/04, E04H 12/10

(21) Application number: **87201810.6**

(22) Date of filing: **22.09.87**

(54) **Juncture assembly between assemblable elements of a support frame, in particular of a crane.**

(30) Priority: **14.05.87 IT 2052887**

(43) Date of publication of application:
**17.11.88 Bulletin 88/46**

(45) Publication of the grant of the patent:
**04.09.91 Bulletin 91/36**

(84) Designated Contracting States:
**AT BE CH DE ES FR GB GR LI LU NL SE**

(56) References cited:
CH-A- 660 060          FR-A- 1 588 135
GB-A- 403 052          GB-A- 2 119 891
US-A- 1 806 312          US-A- 1 806 687
US-A- 1 836 865          US-A- 3 521 917

(73) Proprietor: **SOCIETA' INDUSTRIE METALMEC-CANICHE PER AZIONI S.I.M.M.A. S.p.A.**
**Via G. da Udine 45**
**I-20156 Milan(IT)**

(72) Inventor: **Gariboldi, Giovanni**
**Via Vittorio Veneto 11**
**I-20091 Bresso Milan(IT)**

(74) Representative: **De Carli, Erberto et al**
**ING. BARZANO' & ZANARDO MILANO S.p.A.**
**Via Borgonuovo, 10**
**I-20121 Milano(IT)**

EP 0 290 681 B1

## Description

The present invention relates to a juncture asemly between assemblable elements of a support frame, in particular of a crane.

It is known that tower cranes are composed, in the vertical-axis portion of their structure, by a set of tower elements assembled on each other.

Such tower elements are rigidly connected with one another by using several juncture systems.

As a matter of fact, these juncture systems connect lined-up uprights of the tower elements.

According to one of the proposed juncture systems, to the purpose of connecting each couple of adjacent uprights, a joint is provided, which comprises a first juncture element integral with one of the two uprights, and a second juncture element, integral with the other one of the two uprights; the two juncture elements are provided with respective heads mating in a male-female fashion; these heads are fastened to each other in such a mating position by means of two half-shells, which close over said heads, forming a sleeve, and which are tightened to each other by means of four screws, which are screwed down in the half-shells along parallel, symmetrically distributed axes close to axes tangent to the half-shells.

This solution shows drawbacks.

First of all, if loads applied to the tower crane generate on each joint stresses tending to shift the longitudinal axes of the two heads from a position of coincidence to a position of mutual inclination, the tightening screws which fasten the two half-shells to each other result to be very stressed; that may even result in the breakage of the screws, with easily imaginable consequences.

With such juncture systems, furthermore, the assembling of the tower crane results extremely long and laborious, inasmuch as the operator must screw down and tighten four screws for each couple of consecutive uprights, and it is well-known that the couples of uprights to be connected are many in a tower crane.

It should be added that the male-female coupling presupposes a different shape of the two heads of the two juncture elements, and hence a different and expensive production processing for each of them; this is true for the half-shells too, in that one of them must receive only the shank of the screws, whilst the other one must receive, besides the shank, also the head of the screws. This fact causes high production and storage costs for the manufacturer of the tower crane.

The prior art FR-A-1 588 135 shows a juncture assembly between sections of a crane, comprising two juncture elements provided with two respective facing heads fastened to each other by means of two mutually tightened half-shells; the heads and the half-shells have mutually cooperating inclined walls for axially pressing the heads.

Two lateral screws are provided for fastening the half-shells. The two half-shells are different one with respect to the other.

Such a juncture assembly does not reveal a high dynamic strength when the crane is loaded, and is weak particularly as regards the shear stresses.

The two screws lie in a highly solicited zone and therefore may break; furthermore the use of two screws for each juncture assembly complicates the assembling operations.

The fact that the two half-shells are different one with respect to the other complicates the manufacture and the assembly of the junction.

In US-A-1 806 312 the two juncture elements are fastened to each other by a sleeve which is locked by means of three bolts. Also in this case the juncture assembly does not reveal a high dynamic strength when the crane is loaded, the bolts lie in a highly solicited zone and the use of three bolts complicates the assembling operations.

US-A-1 806 687 concerns a pull road connection for joining the ends of a broken pull rod or shackle line in the oil fields, and therefore is not suitable for joining the sections of a crane.

The purpose of the present invention is to obviate the above-said drawbacks.

Such a purpose is achieved by means of a juncture assembly having the features of claim 1.

Hereunder, an exemplifying form of practical embodiment of the present invention is disclosed, which is not limitative of the same invention, as illustrated in the hereto attached drawing tables, wherein:

Figure 1 shows a perspective exploded view of a juncture assembly according to the invention;

Figure 2 shows, in longitudinal section, a partial view of the assembly of Figure 1, in its assembled configuration;

Figure 3 shows a perspective view of a plurality of juncture assemblies, identical to that of Figure 1, applied to a tower crane.

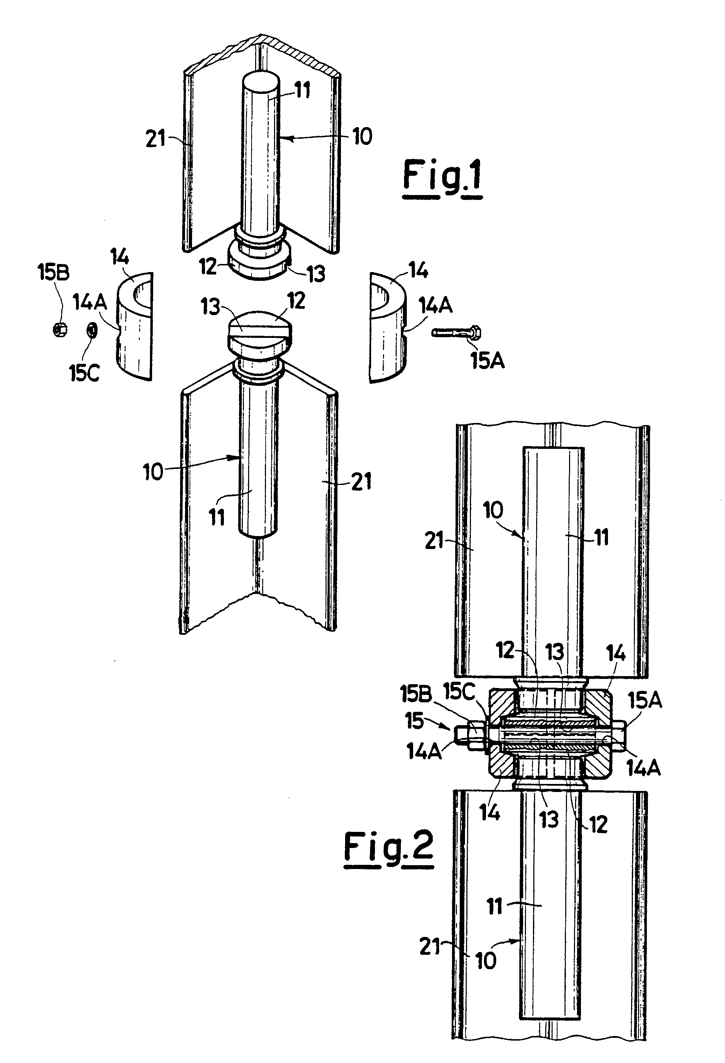

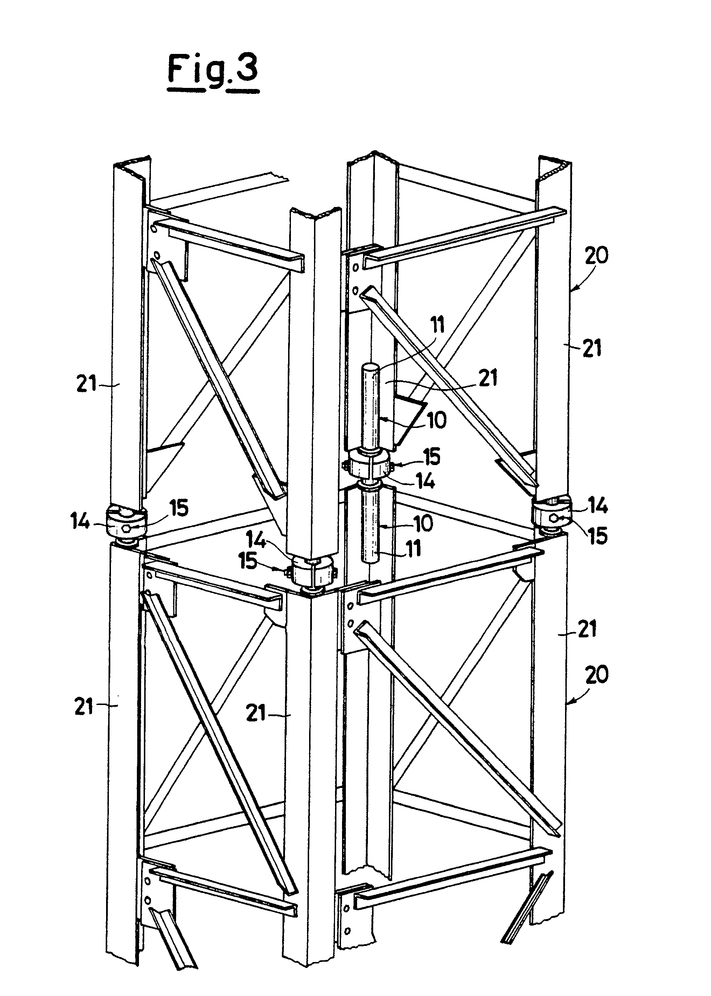

The juncture assembly shown in Figures 1, 2 is particularly, but not exclusively, destined to connect the tower element of a tower crane, shown in Figure 3.

It is provided with two identical juncture elements, indicated by the reference numeral 10, each of which comprises a cylindrical stem, and a head having a circular shape which is radiused with the stem, respectively indicated by the reference numerals 11 and 12.

The stem 11 of one of the two juncture elements 10 is fastened, e.g, by welding, to an upright, having an"L"-shaped outline, indicated by the reference numeral 21, of a tower element 20 of the tower crane, and the stem 11 of the other juncture element 10 is equally fastened to an identical upright 21 of another tower element 20 consecutive to the preceding one, and lined up with it.

In each head 12 a semi-cylindrical groove 13 is formed along a diametrical, i.e., transversal, axis of symmetry of the head.

Furthermore, two identical half-shells 14 are provided; each of them has a generally semi-cylindrical shape, with a substantially "C"-shaped cross section (Figure 2), destined to enclose the two heads 12.

For assembling such a juncture assembly, the two tower elements 20 are superimposed to each other, so that, the two heads 12 come to superimpose to, and to perfectly mate, with each other, forming, with the two grooves 13, a cylindrical seat. Now, the two half-shells 14 are assembled, so to enclose the two heads 12, locking them to each other, thanks to their "C"-shaped cross-section, forming a sleeve, and are tightly fastened to each other by means of a bolt 15. The stem of the screw 15A of the bolt 15 runs through a bore 14A provided on a half-shell 14, the above-said cylindrical seat, and the bore 14A of the other half-shell 14. The nut 15B of the bolt 15 comes to press, with the interposition of a washer 15C, against one of the two half-shells 14, in contrast with the action of the head of the screw 15A, which presses against the other half-shell 14, a long a transversal axis of symmetry of the two half-shells.

In Figure 3, two consecutive tower elements 20 of the tower crane are partially shown. For their mutual rigid connection, four juncture assemblies, like the juncture assembly herein above disclosed, are necessary, in that four pairs of consecutive uprights 21 are provided.

Such a juncture system brilliantly obviates the drawbacks seen in the introduction.

As a matter of fact, such a juncture system mainly reveals a high strength when the crane is loaded.

In this regard it is first of all stressed that the continuous seat, the single bolt 15 and the action of the bolt which causes the mating between the bolt itself and the seat concur to realise a joint structure having substantially the behaviour of a single piece joint structure without solution of continuity, as clearly shown in Fig. 2.

The mating bolt-seat confers a high resistance to the shear stresses, because the bolt opposes to the relative shear movements of the heads 12.

The position of the fastening bolt which mutually tightens the two half-shells along a diametrical axis of symmetry of the heads of the juncture elements involves low stresses of the same tightening bolt when the crane is charged with a load. In particular, such stresses result to be much lower than the stresses which are applied to the fastening elements of the juncture assemblies of the prior art, discussed in the introduction; in fact, the above-said axis of symmetry shows to be the locus undergoing the minimum stress relatively to the axes, close to ares tangent to the half-shells, along which the above-said fastening elements are positioned.

For each couple of uprights, the operator must tighten one bolt only, and in this way the crane assembling time results to be considerably reduced relatively to the assembling time required by the juncture assemblies described in the introduction.

The fact that the two juncture elements, as well as the two half-shells, are identical to each other, allows avoiding differentiated processing routes, with consequent reductions in production and storage costs.

In the herein illustrated example, wherein the uprights 21 have an "L"-shaped outline, the stem 11 of each juncture element 10 is fastened in correspondence with the axis of intersection of the two flanges of the upright, this position resulting to be the best one from all viewpoints.

Also uprights having a different outline can be provided, e.g., "U"-shaped uprights, or tubular uprights, with which the stem of each juncture element is made integral.

Clearly, variants having different shapes of both the stem and the head of the juncture element, and shape variants of the two half-shells can be provided. Also the groove provided in the head can have different shapes.

Obviously, the herein disclosed and illustrated juncture assembly can be applied to cranes in general, and, in a more general meaning, to any support frames made up of assemblable elements. The assemblable elements can be positioned, besides vertically, as in the herein exemplifying form of practical embodiment, also horizontally and obliquely, and in these cases, instead of the uprights, other lined-up portions of the assemblable elements shall be concerned.

## Claims

1. A juncture assembly between sections (21) of a support frame, particularly of a crane, comprising two juncture elements (10) provided with two respective facing heads (12) fastened to each other by means of two mutually tightened half-shells (14), the heads (12) and the half-shells (14) having mutually cooperating inclined walls for axially pressing the heads (12) one against the other, characterised in that each head (12) is provided with a groove (13) continuously extending along a transversal axis of simmetry on the head front face, the two grooves (13) being facing with each other to form a seat, and in that a single tightening bolt (15) is provided passing through said seat and through respective aligned bores (14A) of the half-shells (14), said bolt (15) exerting on the half-shells (14) along said axis of simmetry opposite forces which cause said seat to matingly receive the shank of the bolt (15).

2. Juncture assembly according to claim 1, wherein said bolt (15) comprises a screw (15A) and a nut (15B), the head of the screw (15A) and the nut (15B) performing opposite tightening actions on respectively the one and the other of the two half-shells (14), the shank of the screw (15A) being the shank of the bolt (15).

3. Juncture assembly according to claim 2, wherein each groove (13) has a semicylindrical shape, so to form, with the other groove (13), a cylindrical seat inside which the shank of said screw (15A) is housed.

4. Juncture assembly according to claim 1, wherein each half-shell (14) has a substantially "C"-shaped section.

5. Juncture assembly according to claim 1 or 4, wherein each head (12) has a circular shape, and each half-shell (14) has a substantially semicylindrical shape.

6. Juncture assembly according to claim 1, wherein each juncture element (10) comprises a stem (11) which is radiused with the head (12).

7. Juncture assembly according to claim 6, wherein said stem (11) is rigidly fastened to a respective section of the sections (21) of the support frame.

8. Juncture assembly according to claim 6 or 7, wherein said stem (11) has a cylindrical shape.

9. Juncture assembly according to claim 1, wherein each of said sections (21) has an "L"-shaped outline, and the respective juncture element (10) is fastened at the line of intersection of the two flanges of the outline.

**Revendications**

1. Dispositif de jonction entre des parties (21) d'une structure support, en particulier d'une grue, comprenant deux éléments de jonction (10) pourvus de deux têtes respectives face à face (12) fixées l'une à l'autre au moyen de deux demi-coquilles (14) serrées l'une contre l'autre, les têtes (12) et les demi-coquilles (14) présentant des parois inclinées mutuellement coopérantes pour presser axialement les têtes (12) l'une contre l'autre, caractérisé en ce que chaque tête (12) comporte une rainure (13) s'étendant de façon continue le long d'un axe transversal de symétrie sur la face frontale de la tête, les deux rainures (13) étant en face l'une de l'autre pour définir un siège, et en ce qu'il est prévu un unique boulon de serrage (15) qui passe dans ledit siège et dans des trous respectifs alignés (14A) des demicoquilles (14), ledit boulon (15) exerçant sur les demicoquilles (14), le long dudit axe de symétrie, des forces opposées qui ont pour effet que le dit siège s'accouple avec la tige dudit boulon (15).

2. Dispositif de jonction suivant la revendication 1, dans lequel ledit boulon (15) comprend une vis (15A) et un écrou (15B), la tête de la vis (15A) et l'écrou (15B) produisant des actions de serrage opposées respectivement sur l'une et l'autre des deux demicoquilles (14), la tige de la vis (15A) étant la tige du boulon (15).

3. Dispositif de jonction suivant la revendication 2, dans lequel chaque rainure (13) est semi-cylindrique de manière à définir, avec l'autre rainure (13),un siège cylindrique dans lequel se loge la tige de ladite vis (15A).

4. Dispositif de jonction suivant la revendication 1, dans lequel chaque demi-coquille (14) a une section sensiblement en forme de C.

5. Dispositif de jonction suivant la revendication 1 ou 4, dans lequel chaque tête (12) a une forme circulaire et chaque demi-coquille (14) a une forme sensiblement semi-cylindrique.

6. Dispositif de jonction suivant la revendication 1, dans lequel chaque élément de jonction (10) comprend une tige (11) qui est coaxiale à la tête (12).

7. Dispositif de jonction suivant la revendication 6, dans lequel ladite tige (11) est rigidement fixée à une partie respective des parties (21) de la structure support.

8. Dispositif de jonction suivant la revendication 6 ou 7, dans lequel ladite tige (11) a une forme cylindrique.

9. Dispositif de jonction suivant la revendication 1, dans lequel chacune desdites parties (21) a un profil en L et l'élément de jonction respectif (10) est fixé à l'endroit de la ligne d'intersection des deux ailes du profil.

**Patentansprüche**

1. Verbindung zwischen Abschnitten (21) eines Tragrahmens, insbesondere eines Kranes, mit zwei Verbindungselementen (10), die mit zwei einander zugewendeten Köpfen (12) versehen sind, die aneinander mittels zweier gegeneinander abgedichteter Halb-Hülsen (14) befestigt sind, wobei die Köpfe (12) und die Halb-Hülsen (14) miteinander zusammenwirkende geneigte Wände haben, um die Köpfe (12) gegeneinander in axialer Richtung zu drücken, dadurch gekennzeichnet, daß jeder Kopf mit einer Nut (13) versehen ist, die sich kontinuierlich entlang einer querverlaufenden Symmetrieachse an der Stirnseite des Kopfes erstreckt, wobei die zwei einander zugewendeten Nuten (13) gemeinsam einen Sitz bilden, und daß ein einziger Dichtungsbolzen (15) vorgesehen ist, der durch den Sitz und durch jeweils miteinander fluchtende Bohrungen (14A) der Halb-Hülsen (14) verläuft, welcher Bolzen (15) auf die Halb-Hülsen (14) entlang der Symmetrieachse einander entgegengerichtete Kräfte ausübt, die den Sitz veranlassen, den Schaft des Bolzens (15) passend aufzunehmen.

2. Verbindung nach Anspruch 1, wobei der Bolzen (15) eine Schraube (15A) und eine Mutter (15B) aufweist und der Kopf der Schraube (15A) und die Mutter (15B) einander entgegengerichtete Dichtwirkungen auf die eine bzw. die andere der beiden Halb-Hülsen (14) ausüben, und wobei der Schaft der Schraube (15A) der Schaft des Bolzens (15) ist.

3. Verbindung nach Anspruch 2, wobei jede Nut (13) halbzylindrische Form hat, sodaß mit der jeweils anderen Nut (13) ein zylindrischer Sitz gebildet wird, welcher den Schaft der Schraube (15A) aufnimmt.

4. Verbindung nach Anspruch 1, wobei jede Halb-Hülse (14) einen im wesentlichen C-förmigen Abschnitt aufweist.

5. Verbindung nach Anspruch 1 oder 4, wobei jeder Kopf (12) Kreisform hat und jede Halb-Hülse (14) eine im wesentlichen halbzylindrische Form hat.

6. Verbindung nach Anspruch 1, wobei jedes Verbindungselement (10) einen Schaft (11) aufweist, der mittig in Bezug auf den Kopf (12) angeordnet ist.

7. Verbindung nach Anspruch 6, wobei der Schaft (11) an einem zugeordneten Abschnitt des Abschnittes (21) des Tragrahmens starr befestigt ist.

8. Verbindung nach Anspruch 6 oder 7, wobei der Schaft (11) zylindrische Form hat.

9. Verbindung nach Anspruch 1, wobei jeder der Abschnitte (21) L-förmigen Querschnitt hat und das jeweilige Verbindungselement (10) an der Schnittlinie der beiden Flanschen des Querschnittes befestigt ist.

_Fig.1_

_Fig.2_

# Fig.3